# EUROPEAN PATENT APPLICATION

(11) **EP 2 674 823 A1**
(43) Date of publication of application: **18.12.2013**
(21) Application number: 12171910.8
(22) Date of filing: 14.06.2012
(51) Int. Cl.: G05B 19/042, G05B 9/02

(54) **Emergency management system**

(71) Applicant: Siemens Aktiengesellschaft, 80333 München (DE)
(72) Inventor: Douglas, Antony Louis Piriyakumar, 560047 Bangalore (IN); Gopalakrishnan, Pradeep Kumar, 560103 Bangalore (IN); Mishra, Anant Kumar, 560050 Bangalore (IN); Venkateswaran, Sornam Vishwanathan, 560084 Bangalore (IN)

(57) **Abstract**

An emergency management system (100) is disclosed. The emergency management system (100) includes a master module (102) and multiple slave modules (104) interconnected in a closed loop (108). Each slave module (104) includes switching means (202) and a time-delay relay (204), each of the switching means (202) and the time-delay relay (204) being operable in a normal operating mode and an emergency operating mode to provide a first, a second, and a third electrical path (P1, P2, and P3), wherein at least one of the electrical paths (P1, P2, and P3) includes an electrical impedance (206) to characterize an individual slave module (104) in the plurality of slave modules (104) such that the master module (102) determines an operating mode of the switching means (202) in each slave module (104) based on electrical impedance of the closed loop (108).

## Description

The present invention generally relates to emergency management systems. More specifically, the present invention relates to an emergency management system suitable for use in conveyor systems.

Conveyor systems are widely used for transporting articles or materials in various industrial applications related to manufacturing, processing or packaging. Such systems are particularly advantageous in mining, metal manufacturing, baggage handling, pharmaceutical, and auto ancillaries industries.

A typical conveyor system includes a conveyor belt that is rotated around a series of rollers such that articles or materials placed on the conveyor belt are transported from one location to another. At the same time, other implementations, such as those based on movable slats, are also commonly used.

In several cases, the conveyor system represents a cooperative work environment wherein human beings such as plant personnel, operators, and so on, work in close vicinity of high power machines. Evidently, the conveyor systems pose an inherent threat to life safety. Serious injuries and/or loss of life may occur if an operator, plant personnel, or any other life form in close vicinity of the conveyor systems gets inadvertently caught therein. This problem is particularly aggravated in case of the conveyor systems extending over long distances in an open environment.

Accordingly, it is imperative to provide an emergency management system to prevent inadvertent external interference with the conveyor system. Several such emergency management systems have been proposed in the state of the art. Such mechanisms are based on an underlying principle that whence triggered, driving power is prevented from being supplied to the conveyor system.

One solution known in the state of the art is based on installation of pull-ropes on opposite sides of the conveyor belt extending along the length of the conveyor system. Normally-closed lever switches are connected to the pull-rope at regular intervals along the length thereof such that when the pull-rope is pulled, at least one lever switch connected thereto is opened. All lever switches are connected in series to the main drive of the conveyor system. Thus, during an emergency, an operator may pull the pull-rope to cut-off power supply to the main drive of the conveyor system, and thereby bringing the conveyor belt to an immediate halt. After an emergency stop, it becomes necessary to manually inspect entire length of the conveyor system to ascertain the location of an emergency and take appropriate steps to address the same.

This solution may be satisfactory for small-scale conveyor systems with a length of only a few meters. However, in case of large-scale conveyor systems, such as those found in mining, metallurgy, and similar applications, which run up to lengths of a few hundred meters to a few kilometers, such manual inspection leads to inordinate delay in addressing an emergency situation and restarting the conveyor system.

Accordingly, it is desirable to provide an emergency management system such that location information corresponding to an emergency is readily available such that required action may be taken in a time-efficient manner.

One such system is known from US 5,263,570. The patent provides a light indicator system including a plurality of lights positioned at various locations along the length of a conveyor for expeditiously locating a site of emergency in the conveyor system. Each indicator light is connected to an emergency switch included in the conveyor system. The light indicator system includes an indicator circuit, a resistor, and light means. The indicator circuit is connected to each of said emergency switches, said indicator circuit includes a bridge rectifier which connects said indicator circuit to an emergency switch, and is activated when said emergency switch indicates said emergency situation. The resistor is connected in series with said bridge rectifier. The light means including at least one light emitting diode is connected to the indicator circuit such that the light means is illuminated when said emergency switch indicates said emergency situation.

As will be readily apparent, the above-mentioned patent does not provide an entirely satisfactory solution for the recognized need therein, especially if the conveyor system extends over a few miles, the technique disclosed in the above-mentioned patent would still necessitate that an operator manually inspects the length of the conveyor system to identify the switch that has been activated.

In light of the foregoing, there is a need for an improved emergency management system such that location information corresponding to an emergency is readily available such that required action may be taken and an operation of the conveyor system may be restarted in a time-efficient manner. Moreover, taking into consideration the vast installed base of pull-rope based conveyors safety management systems, it is desirable that the improved emergency management system should be such that the existing pull-rope based emergency management system may be upgraded that is, it should be possible to retrofit the improved system in existing pull-rope based emergency management systems.

Accordingly, an object of the present invention is to provide an emergency management system such that location information corresponding to an emergency is readily available.

The object of the present invention is achieved by an emergency management system according to claims 1 and 7 respectively. Further embodiments of the present invention are addressed in the dependent claims.

In a first aspect of the present invention, a first embodiment of an emergency management system is provided. The emergency management system comprises a master module and a plurality of slave modules. Each slave module provides an input forward terminal (F0), an output forward terminal (F1), an input return terminal (R0), and an output return terminal (R1) such that the plurality of slave modules is connected in series to the master module to form a closed loop. Each slave module comprises switching means and a time-delay relay. The switching means are operable in a normal operating mode and an emergency operating mode. Similarly, the time-delay relay is also operable in a normal operating mode and an emergency operating mode. In the normal operating mode, the switching means provide a first electrical path (P1) between the input forward terminal (F0) and the output forward terminal (F1). In the emergency operating mode, the time-delay relay is actuated. Subsequent to being actuated, the time delay relay operates in a normal operating mode for providing a second electrical path (P2) between the input forward terminal (F0) and the output return terminal (R1) during a predefined time period (T0). Subsequent to lapse of the predefined time period (T0), the time-delay relay operates in an emergency operating mode for providing a third electrical path (P3) between the input forward terminal (F0) and the output forward terminal (F1). At least one of the electrical paths comprises an electrical impedance to characterize an individual slave module in said plurality of slave modules. The master module is configured for determining an effective electrical impedance of the closed loop. Further, the master module is configured for determining an operating mode of the switching means in each slave module based on the effective electrical impedance.

The present invention, thus, provides an emergency management system that is capable of providing location information related to an emergency. During an emergency, the switching means in one or more slave modules are switched from the normal operating mode to the emergency operating mode to generate an emergency signal. Subsequently, the emergency management system is operable to determine the operating mode of switching means in each slave module. Thus, the present invention facilitates immediate fault localization such that necessary steps may be taken in a time efficient manner at site of an emergency and the normal operation of an associated system or apparatus, such as a conveyor system, may be restored within least possible time interval, thereby, ensuring minimum downtime. Further, the emergency management system of the present invention is applicable to any required industrial environment and in particular, can be easily retrofitted in existing conveyor systems that is, without requiring a replacement of pull-rope based legacy systems therein, and hence, ensures a cost-effective approach.

In accordance with another embodiment of the present invention, the electrical impedance is disposed in one of the electrical paths in each slave module such that the electrical impedances in successive slave modules are arranged in series with respect to the master module such that each slave module is characterized by cumulative electrical impedance corresponding thereto. In accordance with still another embodiment of the present invention, the electrical impedance is disposed in one of the electrical paths in each slave module such that the electrical impedances in successive slave modules are arranged in parallel with respect to the master module, and wherein each slave module is uniquely characterized by the electrical impedance corresponding thereto. According to these technical features, the electrical impedance is disposed in one of the two arrangements, viz series and parallel arrangements based on availability of desired electrical impedances. Therefore, in case as many different electrical impedances as number of slave modules are available, the electrical impedances are disposed in parallel arrangement. On the other hand, in case the number of slave modules is too large, a series arrangement is preferred. In this arrangement, identical electrical impedances are disposed in each slave module, which is then, characterized based on a cumulative electrical impedance corresponding thereto.

In accordance with another embodiment of the present invention, the switching means in each slave module are configured to operate in the emergency operating mode, and the master module identifies an interconnection between a first slave module and a second slave module to be in a short-circuit condition based on constancy of the effective electrical impedance subsequent to lapse of the predefined time period (T0) subsequent to actuating the time-delay relay in the first slave module. In accordance with still another embodiment of the present invention, the switching means in each slave module are configured to operate in the emergency operating mode, and the master module identifies an interconnection between a first slave module and a second slave module to be in an open-circuit condition based on the effective electrical impedance corresponding to an open-circuit condition subsequent to lapse of the predefined time period (T0) after actuating the time-delay relay in the first slave module. These technical features facilitate identification of any short circuit and/or open circuit condition existing in the emergency management system.

In accordance with another embodiment of the present invention, the switching means in each slave module are configured to operate in the normal operating mode, and the master module is configured to establish a steady-state electrical current in the closed loop, and generate an emergency signal based on a change in the steady-state electrical current due to a change in said operating mode of said switching means in one or more of said slave modules. Thus, according to this technical feature, a change in an operating mode of the switching means, and/or a change in circuit conditions due to a short-circuit and/or an open circuit in the closed loop is/are detected by the master module, which generates an emergency signal such that the suitable remediation measures are adopted.

In a second aspect of the present invention, a second embodiment of the emergency management system is provided. As in first embodiment, the emergency management system comprises a master module and a plurality of slave modules. Each slave module provides an input forward terminal (F0), an output forward terminal (F1), an input return terminal (R0), and an output return terminal (R1) such that the plurality of slave modules is connected in series to the master module to form a closed loop. Each slave module comprises switching means operable in a normal operating mode and an emergency operating mode. In the normal operating mode, the switching means provide a first electrical path (P1') between the input forward terminal (F0) and the output forward terminal (F1). In the emergency operating mode, the switching means provide a second electrical path (P2') between the input forward terminal (F0) and the output forward terminal (F1). At least one of the electrical paths comprises an electrical impedance to characterize an individual slave module in the plurality of slave modules. The master module is configured for determining an effective electrical impedance of the closed loop. Further, the master module is configured for determining an operating mode of the switching means in each slave module based on the effective electrical impedance.

In accordance with another embodiment of the present invention, the electrical impedance in each slave module is linearly independent from the electrical impedances in remaining slave modules in the plurality of slave modules. Various other technical features of the second embodiment of the present invention are similar to those described in conjunction with the first embodiment.

The present invention is further described hereinafter with reference to illustrated embodiments shown in the accompanying drawings, in which:
- FIG 1: illustrates a schematic representation of an emergency management system in accordance with an embodiment of the present invention,
- FIG 2: illustrates a schematic representation of a slave module in accordance with a first embodiment of the present invention,
- FIGS 3A-3D: illustrate simplified circuit representations wherein an electrical impedance is disposed in series configuration and variation of electrical current in the emergency management system in accordance with the first embodiment of the present invention,
- FIGS 4A-4B: illustrate a simplified circuit representation wherein an electrical impedance is disposed in parallel configuration and a variation of electrical current in the emergency management system in accordance with the first embodiment of the present invention, and
- FIG 5: illustrates a schematic representation of a slave module in accordance with a second embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

The emergency management system of the present invention is suitable for use with any distributed system, such as a conveyor system, building automation, fire safety and alarm, and so on. The present invention will be hereinafter described primarily in the context of a conveyor system. However, the scope of the present invention is not limited to conveyor systems, and various techniques of the present invention are equally applicable to various other applications such as fire alarm management in building automation, and the like.

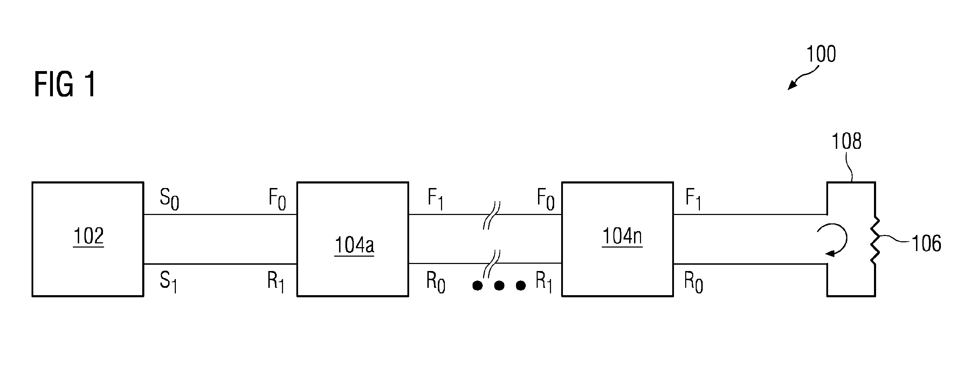

Referring now to FIG 1, a schematic representation of an emergency management system 100 in accordance with an embodiment of the present invention is provided.

The emergency management system 100 includes a master module 102 and a plurality of slave modules 104a through 104n. The emergency management system 100 also includes current-limiting impedance 106. The master module 102, the plurality of slave modules 104, and the current-limiting impedance 106 are interconnected to form a closed loop 108.

As mentioned, in an example, the emergency management system 100 of the present invention is used with a conveyor system (not shown). As well-known in the state of the art, the conveyor system includes a drive control module that provides power supply to various motorized components included in the conveyor system.

The master module 102 is communicatively coupled to the drive control unit and may provide one or more control signal thereto. Further, the master module 102 may receive power supply from the drive control unit. Alternatively, the master module 102 receives power supply from an independent source. The master module 102 is also configured to supply an electrical current to slave modules 104. In various exemplary embodiments of the present invention, the electrical current supplied to the slave modules 104 may be direct-current or alternating-current.

The individual slave modules 104 are spatially located along a length of the conveyor system, either on one or both sides of the conveyor system.

As depicted in the adjoining figure, the master module 102 has supply ports (S0, S1) and each slave module 104 has an input forward terminal (F0), an output forward terminal (F1), an input return terminal (R0) and an output return terminal (R1). The master module 102 and the plurality of slave modules 104 are interconnected to form a closed loop 108, in the manner depicted in the adjoining figure. The current-limiting impedance 106 is included in the closed loop 108, as shown in the adjoining figure, to limit a current level in the closed loop within permissible limits. It should be noted that in case the power supply is a direct-current voltage source, the current-limiting impedance 106 may be disposed between supply port (S0) and input forward terminal (F0); or between supply port (S1) and output return terminal (R1) instead of the position shown in FIG 1.

Each slave module 104 is operable in two distinct operating modes, namely, a normal operating mode and an emergency operating mode. The slave modules 104 are operatively coupled to a pull-rope arrangement or any other actuating means such that an operator or any other suitable agent is able to actuate one or more slave modules 104. Each slave modules 104 is configured such that, subsequent to such actuation while working in the normal operating mode, the slave module 104 changes from the normal operating mode to the emergency operating mode.

During an initial start-up of the conveyor system, each slave module 104 is configured to operate in the normal operating mode, and the master module 102 establishes a steady-state electrical current in the closed loop 108. When one or more slave modules 104 are actuated, the one or more slave modules 104 change from the normal operating mode to the emergency operating mode, and consequently, the steady-state electrical current in the closed loop 108 is changed. The master module 102 senses the change in steady-state electrical current and generates an emergency signal.

In order to provide a fail-safe arrangement, the master module 102 is configured to also generate the emergency signal based on detection of short-circuit or open circuit condition in the closed loop 108. Thus, in the event of short-circuit or open circuit condition in the closed loop 108, which affect the steady-state electrical current in the closed loop 108 and may prevent desired operation of the emergency management system 100, the emergency signal is generated as a preventive measure.

The emergency signal is suitably processed to provide a shut-down signal to the drive control unit of the conveyor system. It should be noted that the conveyor system may be configured to respond to the shut-down signal in any suitable manner. In various exemplary embodiments of the present invention, the shut-down signal may result in switching-off power supply to a motor drive of the conveyor system, or activating a braking system of the conveyor system, or de-clutching the motor drive from a transmission drive of the conveyor system, and so on.

Subsequent to generating an emergency signal in the event of an emergency indicated through actuation of one or more slave modules 104 or detection of any undesirable condition, such as short circuit or open circuit condition in the emergency management system 100, the master module 102 is configured to obtain information related to an operating mode of each slave module 104.

These and other related features of the present invention shall be explained in more detail in conjunction with subsequent figures.

The master module 102 includes a display module (not shown), and is configured to display the operating mode of one or more slave devices 104 in the emergency management system 100 and also, any short-circuit or open circuit conditions in the emergency management system 100.

In accordance with an embodiment of the present invention, the master module 102 is configured to generate appropriate audio-visual alarms to indicate an emergency condition. Further, in the event of an alarm, if appropriate steps to suitably acknowledge and resolve an emergency situation are not taken within a predefined time interval, a second set of audio-visual alarms may be triggered by the master module 102.

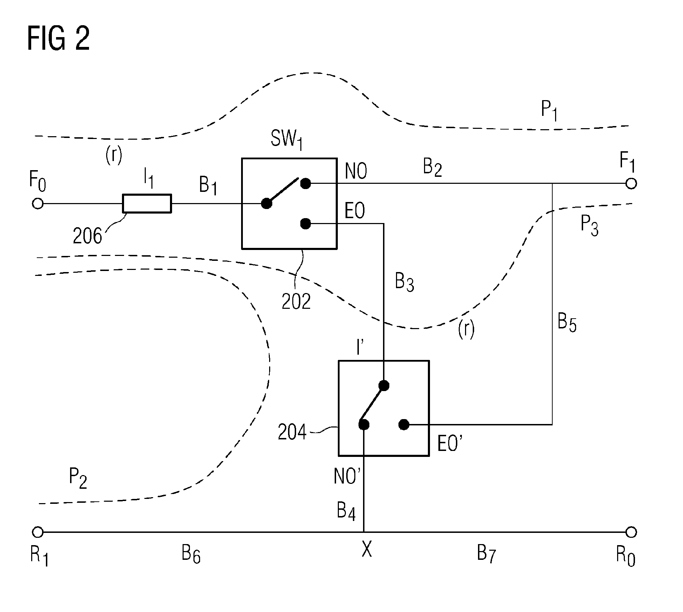

Referring now to FIG 2, a schematic representation of a slave module 104 is provided in accordance with a first embodiment of the present invention.

Each slave module 104 includes switching means 202, a time-delay relay 204, and an electrical impedance 206. As shown, the input return terminal (R0) and the output return terminal (R1) are interconnected through an intermediate junction (X).

The switching means 202 provide at least one input port (I), a normal output port (NO), and an emergency output port (EO). Similarly, the time-delay relay 204 provides at least one input port (I'), a normal output port (NO'), and an emergency output port (EO').

The input port (I) is connected to the input forward terminal (F0) through a first electrical connection (B1), and the normal output port (NO) is connected to the output terminal (F1) through a second electrical connection (B2). The emergency output port (EO) is connected to the input port (I') through a third electrical connection (B3).

Further, the normal output port (NO') is connected to the intermediate junction (X) through a fourth electrical connection (B4), and the emergency output port (EO') is connected to the output terminal (F1) through a fifth electrical connection (B5).

The output return terminal (R1) and the input return terminal (R0) are connected to the intermediate junction (X) through a sixth electrical connection (B6) and a seventh electrical connection (B7) respectively.

Each of the switching means 202 and the time-delay relay 204 are operable in a normal operating mode and an emergency operating mode to switch corresponding input port (I, I') to corresponding normal output port (NO, NO') and corresponding emergency output port (EO, EO') respectively.

As mentioned in conjunction with FIG 1, each slave module 104 is operable in two distinct operating modes, namely, a normal operating mode and an emergency operating mode. It should be noted that, as described herein, the two operating modes of the slave module 104 are based on the respective operating modes of the switching means 202 therein. Thus, when the switching means 202 in a slave module 104 are operating in the normal operating mode, said slave module 104 is said to be in the normal operating mode and similarly, when the switching means 202 in a slave module 104 are operating in the emergency operating mode, said slave module 104 is said to be in the emergency operating mode.

As will be apparent from the adjoining figure, the switching means 202 correspond to a single-pole double-throw (SPDT) switch configuration. It should be readily apparent to a person ordinarily skilled in the art that several different implementations of the switching means 202 are possible, for example, the switching means 202 may be implemented using a parallel combination of two single-pole single-throw (SPST) switches, and so on. All such variations are intended to be well within the scope of the present invention.

As will be readily understood from the adjoining figure, while operating in the normal operating mode, the switching means 202 provide a first electrical path (P1) between said input forward terminal (F0) and said output forward terminal (F1). The first electrical path (P1) includes the first electrical connection (B1) and the second electrical connection (B2). On the other hand, while operating in the emergency operating mode, the switching means 202 establishes an electrical path through the first electrical connection (B1) and the third electrical connection (B3) such that an electrical current received at input forward terminal (F0) is provided to the time-delay relay 204 to thereby actuate the time-delay relay 204.

The time-delay relay 204 operates in the normal operating mode for providing a second electrical path (P2) between said input forward terminal (F0) and said output return terminal (R1) during a predefined time period subsequent to said actuation of said time-delay relay. The time period is based on configuration of the time-delay relay 204 as well known in the state of the art. As evident, the second electrical path (P2) includes the first electrical connection (B1), the third electrical connection (B3), and the fourth electrical connection (B4), and the sixth electrical connection (B6).

Subsequent to lapse of said predefined time period, the time-delay relay 204 operates in the emergency operating mode for providing a third electrical path (P3) between said input forward terminal (F0) and said output forward terminal (F1). The third electrical path (P3) includes the first electrical connection (B1), the third electrical connection (B3) and the fifth electrical connection (B5).

As shown in the figure, the electrical impedance 206 is included in the slave module 104 in the first electrical connection (B1). In various alternative embodiments of the present invention, the electrical impedance 206 may be disposed in any of the electrical connections B1 through B7, as will be apparent later in the present description, to characterize an individual slave module 104(r) in said plurality of slave modules 104.

The master module 102 is configured for determining an effective electrical impedance of the closed loop 108. Further, the master module 102 is configured for determining an operating mode of said switching means 202 in each slave module 104 based on the effective electrical impedance of the closed loop 108.

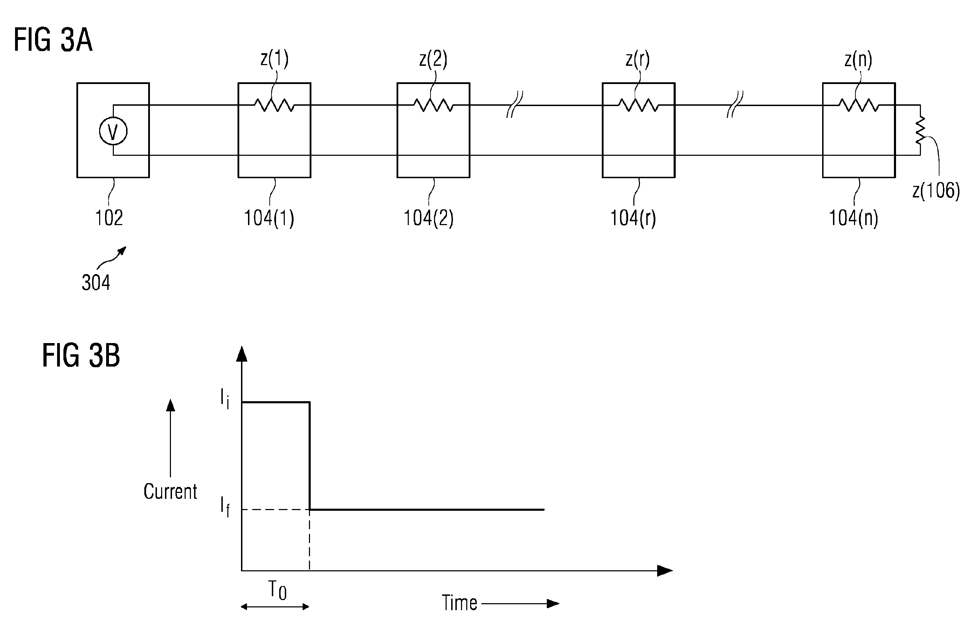

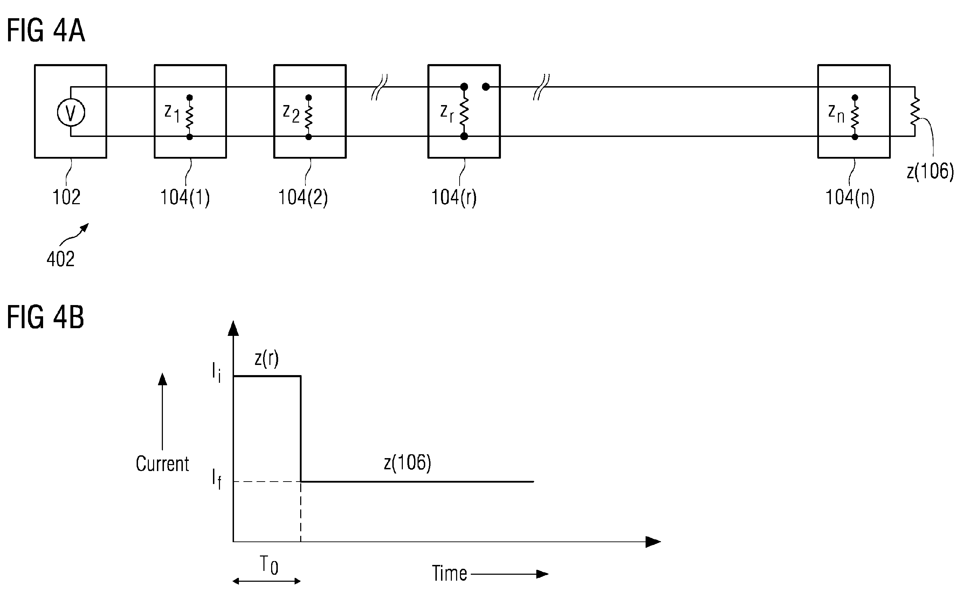

The manner in which the electrical impedances disposed in one of the electrical connections B1 through B7 will now be explained in conjunction with FIGS 3A through 3D as well as FIGS 4A and 4B. The following description should be read in conjunction with FIG 2.

Referring now to FIG 3A, a simplified circuit representation 302 of the emergency management system 100 is provided. The circuit representation depicted in FIG 3A corresponds to embodiment depicted in FIG 2, wherein the electrical impedance 206 is disposed in the first electrical connection (B1). Further, the depicted circuit representation based on assumption that a slave module 104(r) is in emergency operating mode while remaining slave modules 104(1) through 104 (r-1) and 104(r+1) through 104(n) are operating in normal operating mode. Further, it should be noted that the power supply included in the master module 102 is shown as a voltage source; however, in various alternative implementations, the power supply could be a current source as well.

As evident from FIG 3A, when the electrical impedance 206 is disposed in the first electrical connection (B1), the electrical impedances 206(1) through 206(n) in successive slave modules 104 are arranged in series with respect to the master module 102. Thus, each slave module, such as the slave module 104(r) is characterized by cumulative electrical impedance corresponding thereto. In other words, when the slave module 104(r) is in emergency operating mode, the cumulative electrical impedance CZ(r) = Z(1) + Z(2) + Z(3)... + Z(r). Thus, the cumulative electrical impedance corresponding to each slave module 104(r) is unique and hence, facilitates in uniquely characterizing the slave module 104(r) while operating in the emergency operating mode.

In one example, each electrical impedance 206 in individual slave modules 104 may be selected to have equal magnitude, for example, 100 ohm each. In that case, CZ(2) is 200, CZ(3) is 300 and so on.

It should now be readily understood that the electrical impedance 206 may be disposed in any of the second electrical connection (B2), the sixth electrical connection (B6), and the seventh electrical connection (B7) to achieve the same purpose. In case the electrical impedance 206 is disposed in the sixth electrical connection (B6), the mathematical representation provided earlier remains valid, that is, CZ(r) = Z(1) + Z(2) + Z(3)... + Z(r). However, in case the electrical impedance 206 is disposed in any of the second electrical connection (B2) or the seventh electrical connection (B7), the cumulative electrical impedance is provided by the following mathematical representation, CZ(r) = Z(1) + Z(2) + Z(3)... + Z(r-1).

In case a constant voltage source is used as power supply, the variation of electrical current in the closed loop 108 is shown in FIG 3B. When master module 102 provides an electrical current to the slave modules 104, wherein only slave module 104(r) is operating in the emergency operating mode while the remaining slave modules 104 are operating in normal operating mode, initially, the electrical current corresponds to CZ(r), while after a predefined time delay based on configuration of the time-delay relay 204(r), the electrical current corresponds to CZ(n)+Z(106), wherein Z(106) represents the electrical impedance 106. Hence, the electrical current varies between an initial value I(i) and a final value I(f). The master module 102 determines variation of the effective electrical impedance of the closed loop 108 and accordingly, determines an operating mode of the switching means 202 in each slave module 104 based on the effective electrical impedance.

The effective electrical impedance of the closed loop 108 may be determined using any suitable technique known in the art. For example, if a constant voltage source is used as the power supply, the electric current in the closed loop 108 is measured and the effective electrical impedance is determined. Alternatively, if a constant current source is used as the power supply, the electric voltage across supply ports S0 and S1 is measured and the effective electrical impedance is determined. In addition, various electrical impedance measurement methods based on bridge circuits such as Wheatstone bridge, Schering bridge, and so on, may also be used to determine the electrical impedance of the closed loop 108.

The working principle of the present invention, as described above, will now be readily understood in case multiple slave modules 104 are operating in the emergency operating mode.

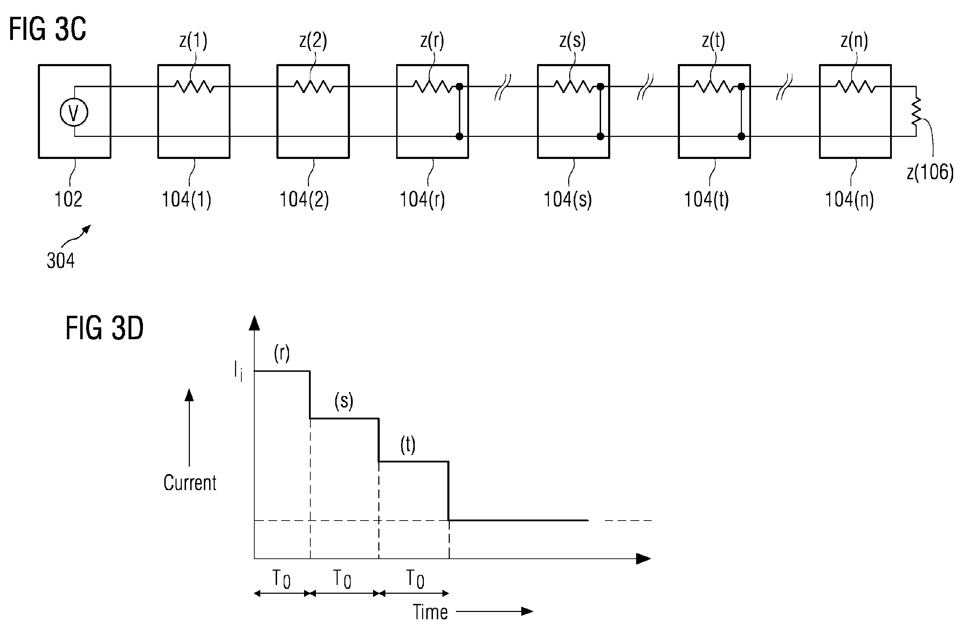

Referring now to FIG 3C, a simplified circuit representation 304 of the emergency management system 100 is provided when three slave modules 104(r), 104(s), and 104(t) are configured in emergency operating mode while remaining slave modules are configured in normal operating mode.

When master module 102 provides an electrical current to the slave modules 104, the electrical impedance successively corresponds to CZ(r), CZ(s), and CZ(t) for predefined time delay based on configurations of the time-delay relay 204(r), 204(s), and 204(t). The corresponding variation of the electrical current in the closed loop 108 is shown in FIG 3D. It should be noted that the variation of the electrical current as shown in FIG 3D is exemplary and relative levels will be dependent on relative magnitudes of the electrical impedances CZ(r), CZ(s), and CZ(t). As explained previously, the electrical current finally corresponds to CZ(n)+Z(106). In the example shown, based on variation of the effective electrical impedance of the closed loop 108, the master module 102 determines that the slave modules 104(r) 104(r), 104(s), and 104(t) are configured in emergency operating mode.

Referring back to FIG 2, in an alternative embodiment of the present invention, the electrical impedance 206 is disposed in one of said electrical paths (P1, P2, and P3) in each slave module such that said electrical impedances in successive slave modules are arranged in parallel with respect to the master module, and wherein each slave module is uniquely characterized by said electrical impedance corresponding thereto. In other words, the electrical impedance 206 is disposed in one of the third electrical connection (B3) and the fourth electrical connection (B4).

Referring now to FIG 4A, a simplified circuit representation 402 of the emergency management system 100 is provided. The circuit representation depicted in FIG 4A corresponds to the embodiment wherein the electrical impedance 206 is disposed in one of the third electrical connection (B3) and the fourth electrical connection (B4). Further, the depicted circuit representation is based on the assumption that a slave module 104(r) is in emergency operating mode while remaining slave modules 104(1) through 104(r-1) and 104(r+1) through 104(n) are operating in normal operating mode.

As evident from FIG 4A, when the electrical impedance 206 is disposed any of the electrical connections (B3, B4), the electrical impedances 206(1) through 206(n) in successive slave modules 104 are arranged in parallel with respect to the master module 102. Thus, each slave module, such as the slave module 104(r) is uniquely characterized by the electrical impedance, such as electrical impedance 206(r) corresponding thereto. In this embodiment, the electrical impedances 206 in individual slave modules 104 should have unique magnitudes.

The variation of the electrical current in the closed loop 108 provided by the master module 104 is shown in FIG 4B. When master module 102 provides an electrical current to the slave modules 104, wherein only slave module 104(r) is operating in the emergency operating mode while the remaining slave modules 104 are operating in normal operating mode, initially, the electrical current corresponds to the electrical impedance Z(r), while after a predefined time delay based on configuration of the time-delay relay 204(r), the electrical current corresponds to the electrical impedance Z(106). The master module 102 determines variation of the effective electrical impedance of the closed loop 108 and accordingly, determines an operating mode of the switching means 202 in each slave module 104 based on the effective electrical impedance.

The working principle of the present invention, as described above, is applicable to the case of multiple slave modules 104 are operating in the emergency operating mode, in a manner similar to as described in conjunction with FIG 3C and FIG 3D.

The operation of the emergency management system 100 will now be explained. The operation of the emergency management system 100 of the present invention can be divided into two distinct phases - namely, a monitoring phase and a diagnostic phase.

In the monitoring phase, the switching means 202 in each slave module 104 are configured to operate in the normal operating mode. The master module 102 is configured to establish a steady-state electrical current in the closed loop 108, and generate an emergency signal based on a change in the steady-state electrical current due to change in the operating mode of any of the slave modules 104.

In the diagnostic phase, the master module 102 supplies an electrical current to the closed loop 108. The master module 102 determines the effective electrical impedance of the closed loop 108 and a variation thereof and based on a variation the effective electrical impedance, as explained in conjunction with preceding figures, determines an operating mode of the switching means 202 in each slave module 104.

Further, in the diagnostic phase, the master module 102 also determines presence of a short circuit or an open circuit condition. Towards this end, each slave module 104 is configured to operate in the emergency operating mode.

Referring back to FIG 3A, as an example, if a short circuit condition exists between the slave module 104(r) and the slave module 104(r+1), the master module 102 identifies the same based on constancy of the effective electrical impedance subsequent to lapse of the predefined time period (T0) subsequent to actuating the time-delay relay 204(r) in the slave module 104(r). In case the effective electrical impedance does not change even after lapse of predefined time period (T0) subsequent to actuating the time-delay relay 204(r) in the slave module 104(r), it is deduced that the interconnection between the slave module 104(r) and the slave module 104(r+1) is under short circuit condition. In this case, the final value of electrical current is fixed to be based on CZ(r) and not an expected final value based on the series combination of CZ(n) and the electrical impedance 106.

Still referring to FIG 3A, as an example, if an open circuit condition exists between the slave module 104(r) and the slave module 104(r+1), the master module 102 identifies the same based on the effective electrical impedance corresponding to an open-circuit condition subsequent to lapse of the predefined time period (T0) subsequent to actuating the time-delay relay 204(r) in the slave module 104(r). In this case, due to open circuit condition after lapse of predefined time period (T0) subsequent to actuating the time-delay relay 204(r) in the slave module 104(r), the effective electrical impedance becomes very high and the electrical current ceases to flow in the closed loop 108. Accordingly, it is deduced that the interconnection between the slave module 104(r) and the slave module 104(r+1) is under open circuit condition.

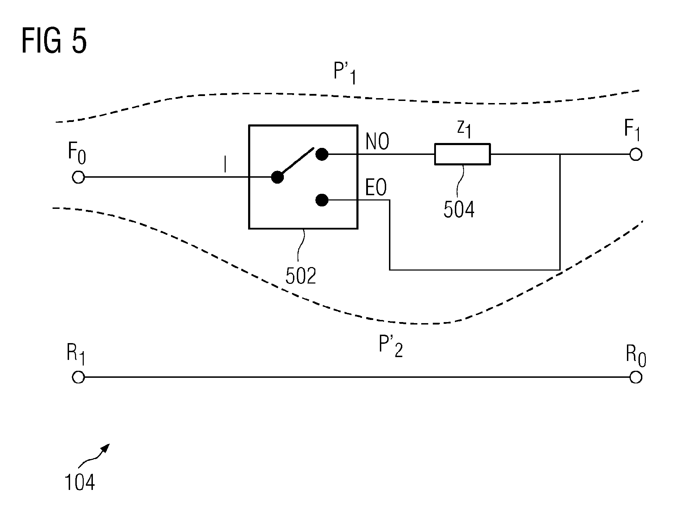

Referring now to FIG 5, a schematic representation of a slave module is shown in accordance with a second embodiment of the present invention.

In the current embodiment, each slave module 104 includes switching means 502 operable in a normal operating mode and an emergency operating mode. In the normal operating mode, the switching means 502 provide a first electrical path (P1') between said input forward terminal (F0) and said output forward terminal (F1). In the emergency operating mode, the switching means 502 provide a second electrical path (P2') between said input forward terminal (F0) and said output forward terminal (F1). At least one of said electrical paths (P1', P2') includes an electrical impedance 504 to characterize an individual slave module 104 in said plurality of slave modules 104.

As in case of the first embodiment, the master module 102 is configured for determining an effective electrical impedance of the closed loop 108. The master module 102 is also configured for determining an operating mode of the switching means 502 in each slave module 104 based on the effective electrical impedance.

In the current embodiment, the electrical impedance 504 in each slave module 104 is linearly independent from said electrical impedances 504 in remaining slave modules 104 in said plurality of slave modules 104. In other words, it is not possible to express any individual electrical impedance 504(r) as a summation of one or more individual electrical impedances 504 included in the emergency management system 100.

The operation of the emergency management system 100 in the monitoring phase in the second embodiment is similar to that in the first embodiment. Thus, the switching means 502 in each slave module 104 are configured to operate in the normal operating mode. The master module 102 is configured to establish a steady-state electrical current in the closed loop 108, and generate an emergency signal based on a change in the steady-state electrical current due to change in the operating mode of one or more of the slave modules 104.

During the diagnostic phase, the effective electrical impedance in closed loop 108 has only one value, and does not change with time, as in the case of the first embodiment. The effective electrical impedance is sufficient to deduce the operating mode of each slave module 104 in the emergency management system 100.

If all the slave modules 104 are operating in the normal operating mode, each corresponding electrical impedance 504 is included in the closed loop 108. In this case, the effective electrical current of the closed loop 108 corresponds to the total electrical impedance Z = Z(1) + Z(2) + Z(3) + Z(4)... + Z(n). However, if one or more slave modules, say for example, slave modules 104(r), 104(s), and 104(t) are operating in the emergency operating mode, then essentially, the corresponding electrical impedances 504(r), 504(s), and 504(t) are by-passed. Thus, the effective electrical impedance of the closed loop 108 corresponds to the reduced electrical impedance Z', given by, Z' = [Z(1) + Z(2) + Z(3) + Z(4)... + Z(n)] - [Z(r) + Z(s) + Z(t)].

Thus, during the diagnostic mode, the master module 102 determines the reduced effective electrical impedance Z'. Owing to the fact that each electrical impedance 504 is linearly independent, the master module 102 resolves the reduced electrical impedance Z' to identify the slave modules 104(r), 104(s), and 104(t) as operating in the emergency operating mode.

Various other technical features in the second embodiment are similar to those described in conjunction with the first embodiment.

The present invention facilitates immediate fault localization such that necessary steps may be taken in a time efficient manner at site of emergency. The emergency management system of the present invention is applicable to any required industrial environment and importantly, can be easily retrofitted in existing systems without necessitating a replacement of the legacy systems, and hence, ensuring a cost-effective approach.

While the present invention has been described in detail with reference to certain embodiments, it should be appreciated that the present invention is not limited to those embodiments. In view of the present disclosure, many modifications and variations would present themselves, to those of skill in the art without departing from the scope and spirit of this invention. The scope of the present invention is, therefore, indicated by the following claims rather than by the foregoing description. All changes, modifications, and variations coming within the meaning and range of equivalency of the claims are to be considered within their scope.

## Claims

1. An emergency management system (100), said emergency management system (100) comprising a master module (102) and a plurality of slave modules (104), each slave module (104) providing an input forward terminal (F0) and an output forward terminal (F1), and each slave module (104) further providing an input return terminal (R0) and an output return terminal (R1) such that said plurality of slave modules (104) is connected in series to said master module (102) to form a closed loop (108),
wherein each slave module (104) comprises switching means (202) and a time-delay relay (204), wherein said switching means (202) are operable in a normal operating mode for providing a first electrical path (P1) between said input forward terminal (F0) and said output forward terminal (F1), and further said switching means (202) are operable in an emergency operating mode wherein said time-delay relay (204) is actuated such that said time-delay relay (204) operates in a normal operating mode for providing a second electrical path (P2) between said input forward terminal (F0) and said output return terminal (R1) during a predefined time period (T0) subsequent to said actuation of said time-delay relay (204), and further such that said time-delay relay (204) operates in an emergency operating mode for providing a third electrical path (P3) between said input forward terminal (F0) and said output forward terminal (F1) subsequent to lapse of said predefined time period (T0), and wherein at least one of said electrical paths comprises an electrical impedance (206) to characterize an individual slave module (104) in said plurality of slave modules (104), and
wherein said master module (102) is configured for determining an effective electrical impedance of said closed loop (108), and further configured for determining an operating mode of said switching means (202) in each slave module (104) based on said effective electrical impedance.

2. The emergency management system (100) according to claim 1, wherein said electrical impedance (206) is disposed in one of said electrical paths in each slave module (104) such that said electrical impedances (206) in successive slave modules (104) are arranged in series with respect to the master module (102) such that each slave module (104) is **characterized by** cumulative electrical impedance (206) corresponding thereto.

3. The emergency management system (100) according to claim 1, wherein said electrical impedance (206) is disposed in one of said electrical paths in each slave module (104) such that said electrical impedances (206) in successive slave modules (104) are arranged in parallel with respect to the master module (102), and wherein each slave module (104) is uniquely **characterized by** said electrical impedance (206) corresponding thereto.

4. The emergency management system (100) according to any of preceding claims, wherein said switching means (202) in each slave module (104) are configured to operate in said emergency operating mode, and wherein said master module (102) identifies an interconnection between a first slave module (104) and a second slave module (104) to be in a short-circuit condition based on constancy of said effective electrical impedance subsequent to lapse of said predefined time period (T0) subsequent to actuating said time-delay relay (204) in said first slave module (104).

5. The emergency management system (100) according to any of preceding claims, wherein said switching means (202) in each slave module (104) are configured to operate in said emergency operating mode, and wherein said master module (102) identifies an interconnection between a first slave module (104) and a second slave module (104) to be in an open-circuit condition based on said effective electrical impedance corresponding to an open-circuit condition subsequent to lapse of said predefined time period (T0) after actuating said time-delay relay (204) in said first slave module (104).

6. The emergency management system (100) according to any of preceding claims, wherein said switching means (202) in each slave module (104) are configured to operate in said normal operating mode, and wherein said master module (102) is configured to establish a steady-state electrical current in said closed loop (108), and generate an emergency signal based on a change in said steady-state electrical current due to a change in said operating mode of said switching means (202) in one or more of said slave modules (104).

7. An emergency management system (100), said emergency management system (100) comprising a master module (102) and a plurality of slave modules (104), each slave module (104) providing an input forward terminal (F0) and an output forward terminal (F1), and each slave module (104) further providing an input return terminal (R0) and an output return terminal (R1) such that said plurality of slave modules (104) is connected in series to said master module (102) to form a closed loop (108),
wherein each slave module (104) comprises switching means (502) operable in a normal operating mode for providing a first electrical path (P1') between said input forward terminal (F0) and said output forward terminal (F1), and further said switching means (502) are operable in an emergency operating mode for providing a second electrical path (P2') between said input forward terminal (F0) and said output forward terminal (F1), wherein at least one of said electrical paths comprises an electrical impedance (504) to characterize an individual slave module (104) in said plurality of slave modules (104),
wherein said master module (102) is configured for determining an effective electrical impedance of said closed loop (108), and further configured for determining an operating mode of said switching means (502) in each slave module (104) based on said effective electrical impedance.

8. The emergency management system (100) according to claim 7, wherein said electrical impedance (504) in each slave module (104) is linearly independent from said electrical impedances (504) in remaining slave modules (104) in said plurality of slave modules (104).

9. The emergency management system (100) according to any of preceding claims, wherein said switching means (502) in each slave module (104) are configured to operate in said normal operating mode, and wherein said master module (102) is configured to establish a steady-state electrical current in said closed loop (108), and generate an emergency signal based on a change in said steady-state electrical current due to a change in said operating mode of said switching means (502) in one or more of said slave modules (104).
